# EUROPÄISCHE PATENTANMELDUNG

(11) **EP 4 228 073 A1**
(43) Veröffentlichungstag der Anmeldung: **16.08.2023**
(21) Anmeldenummer: 22156046.9
(22) Anmeldetag: 10.02.2022
(51) Int. Cl.: H01M 50/358

(54) **KRAFTFAHRZEUGBATTERIE MIT GASABLEITELEMENTEN**

(71) Anmelder: MAGNA STEYR Fahrzeugtechnik GmbH & Co KG, 8041 Graz (AT)
(72) Erfinder: HEIDENBAUER, Oliver, 8580 Köflach (AT); KOSS, Bernhard, 8041 Graz (AT); KREIMAIER, Heimo, 8042 Graz (AT)
(74) Vertreter: Zangger, Bernd

(57) **Zusammenfassung**

Ein Kraftfahrzeug, umfassend eine Batterie, die eine Vielzahl von Batteriezellen (1) umfasst, wobei das Kraftfahrzeug zumindest ein Hohlprofil (2) umfasst, wobei das Hohlprofil (2) eine Vielzahl von Eintrittsöffnungen (3) aufweist, wobei eine Vielzahl von Gasableitelementen (4) an der Vielzahl von Batteriezellen (1) so angeordnet sind, dass aus den Batteriezellen (1) austretendes Gas von den Gasableitelementen (4) in die Eintrittsöffnungen (3) des Hohlprofils (2) geleitet wird.

## Beschreibung

### Gebiet der Erfindung

Die vorliegende Erfindung betrifft ein Kraftfahrzeug, umfassend eine Batterie, die eine Vielzahl von Batteriezellen umfasst.

### Stand der Technik

Es ist bekannt das Kraftfahrzeuge, insbesondere solche mit Elektro- und Hybridantrieben, Hochvoltbatterien mitführen zur Bereitstellung der nötigen Antriebsenergie. Die Batterien werden typischerweise aus einer Vielzahl von Batteriezellen aufgebaut, beispielsweise aus sogenannten "Pouch-Zellen", die flach sind und eine flexible Kunststoffhülle aufweisen.

Es ist bekannt, dass es in einer Hochvoltbatterie zu einem thermischen Ereignis (thermal event) kommen kann, bei dem eine Batteriezelle überhitzt und ausgast (venting). Problematisch ist, dass ein solches Ereignis einer einzelnen Zelle auf nebenliegende Zellen übergreifen kann und es zu einer thermischen Propagation (thermal propagation) kommt, also einem Überhitzen vieler nebeneinander liegender Batteriezellen, da die Hitze sich, zu einem wesentlichen Teil über das austretende heiße Gas, auf benachbarte Zellen ausbreiten kann, so dass diese wiederum ausgasen. Dies führt zu Situationen, welche für die Insassen kritisch werden können.

### Zusammenfassung der Erfindung

Es ist eine Aufgabe der Erfindung, Kraftfahrzeuge mit Batterien mit vielen Batteriezellen zu verbessern, so dass die Sicherheit der Batterie erhöht wird und insbesondere die Gefahr einer thermischen Propagation reduziert wird.

Die Lösung der Aufgabe erfolgt durch ein Kraftfahrzeug, umfassend eine Batterie, die eine Vielzahl von Batteriezellen umfasst, wobei das Kraftfahrzeug zumindest ein Hohlprofil umfasst, wobei das Hohlprofil eine Vielzahl von Eintrittsöffnungen aufweist, wobei eine Vielzahl von Gasableitelementen an der Vielzahl von Batteriezellen so angeordnet sind, dass aus den Batteriezellen austretendes Gas von den Gasableitelementen in die Eintrittsöffnungen des Hohlprofils geleitet wird.

Erfindungsgemäß wird in einem Kraftfahrzeug mit einer Batterie mit vielen einzelnen Batteriezellen der heiße Gasstrom im Falle eines Ausgasens zumindest einer Zelle gezielt abgeleitet, sodass die benachbarten bzw. umliegenden Zellen vor dem heißen austretenden Gas geschützt sind und weniger oder nicht geschädigt werden, insbesondere nicht erhitzt werden. Die Ableitung erfolgt in den Hohlraum eines Hohlprofils, insbesondere in ein Rahmenbauteil des Kraftfahrzeuges, wie einen Schweller und/oder Längsträger und/oder Querträger, und/oder mindestens ein anderes zusätzlich im Fahrzeug angeordnetes und einen Hohlraum aufweisendes Bauteil. Die Ableitung erfolgt über Gasableitelemente entlang des Hohlprofils an mehreren bzw. vielen Stellen in den Rahmen bzw. das Profil und über das Hohlprofil bevorzugt zu Ausgangsöffnungen des Hohlprofils. Die Gasableitelemente leiten das Gas gezielt von den einzelnen Batteriezellen weg, zu den Eintrittsöffnungen des Hohlprofils.

Durch die Ableitung des Gases kann auch verhindert werden, dass die im austretenden Gas einer Zelle enthaltenen elektrisch leitfähigen Partikel eine Kontamination des Batterieraumes bzw. des Zellenbereiches und somit elektrische Kurzschlüsse bei leitfähigen Bauteilen verursachen.

Bevorzugt gibt es im Wesentlichen gleich viele Gasableitelemente wie Eintrittsöffnungen im Hohlprofil und/oder im Wesentlichen mindestens gleich viele Gasableitelemente wie Batteriezellen und/oder im Wesentlichen gleich viele, doppelt so viele oder viermal so viele Gasableitelemente wie Batteriezellen. Für im Wesentlichen jede Batteriezelle ist somit bevorzugt genau ein Gasableitelement, oder zwei oder vier Gasleitelemente, vorgesehen. Die Ableitung des ausströmenden Gases einer Batteriezelle erfolgt bevorzugt jeweils durch einen Kanal, der zwischen zwei benachbarten Gasableitelementen gebildet wird. Der Kanal leitet das Gas bevorzugt einer Batteriezelle gezielt zu einer Eintrittsöffnung am Hohlprofil. Bevorzugt ist an jeder Batteriezellenseite (links oder rechts) für jede Batteriezelle im Wesentlichen jeweils ein Gasableitelement oder mindestens ein Gasableitelement vorgesehen. Bei Anordnung der Gasableitelemente zwischen den Batteriezellen sind zur Bildung eines Gasableitkanales zwei Gasableitelemente für eine Batteriezelle (jeweils links oder rechts) erforderlich. Bei Anordnung der Gasableitelemente in etwa der Mitte der Batteriezellen sind zur Bildung der zum Ausgasen einer Batteriezelle erforderlichen zwei Gasableitkanäle drei Gasableitelemente (jeweils links oder rechts der Batteriezelle) erforderlich.

Das Abführen der thermischen Energie des Ventinggases beim Auftreten eines thermischen Events einer Zelle einer Hochvoltbatterie erfolgt bevorzugt im Rahmen eines "Cell-To-Chassis" Konzepts, also einer direkten Verbauung der Batteriezellen im Kraftfahrzeug. Die Abführung von thermischer Energie bzw. Ventinggasen erfolgt bevorzugt durch die Fahrzeugrahmenkonstruktion, beispielsweise zumindest einen Schweller. Die Leitung der Ventinggase von der Zelle in die Fahrzeugrahmenkonstruktion, beispielsweise den Schweller, erfolgt mittels Gasableitelementen als Gasführungskomponenten, die vorzugsweise im Crashfall nur eine geringe Last auf die Zellen übertragen.

In einem Cell-To-Chassis Fahrzeugkonzept werden Zellen einzeln oder bevorzugt in Gruppen direkt ins Fahrzeug verbaut. Dieses Konzept wird auch als Cell-To-Car, Cell-To-Vehicle sowie structural battery bezeichnet. Verschiedene Zelltypen weisen verschiedene mögliche Stellen auf, an welchen sie im Fall eines thermischen Events ausgasen können, wobei Pouch-Zellen keine eindeutige Vorzugsrichtung aufweisen. Bevorzugt sollen von all diesen möglichen Ausgasungsstellen der Pouch-Zelle austretende Ventinggase von der Zelle weg, in den Außenraum des Kraftfahrzeuges geleitet werden. Dies erfolgt gelenkt durch die Gasableitelemente und nicht irgendwo im freien Raum. So werden die Zellen neben der ersten ausgasenden Zelle weniger aufgeheizt und so erst später (oder gar nicht) in die thermische Propagation gebracht. Die Ableitung erfolgt bevorzugt nicht in Seitenprofile eines Batteriepacks, sondern in Hohlprofilen, bevorzugt im Fahrzeugrahmen, realisierten Kanälen. Bevorzugt werden die Ventiggase in einen hinteren Bereich des Kraftfahrzeuges geleitet und dort nach außen abgelassen.

Die Gasableitelemente erstrecken sich bevorzugt im Wesentlichen vollständig von den Batteriezellen bis zu den Eintrittsöffnungen.

Vorzugsweise sind die Gasableitelemente so angeordnet und/oder so ausgebildet sind, dass aus den Batteriezellen austretendes Gas von den Gasableitelementen in einer vorgesehenen Richtung in die Eintrittsöffnungen des Hohlprofils geleitet wird, so dass der Abtransport des Gases in Richtung der Längserstreckung des Hohlprofils erleichtert wird. Dazu ist bevorzugt ein Winkel zwischen einem jeweiligen Gasableitelement und dem Hohlprofil im Bereich der Eintrittsöffnung kleiner als 70 Grad, bevorzugt kleiner als 50 Grad, so dass das Gas schon annähernd in seiner weiteren Strömungsrichtung in das Hohlprofil gelangt.

Die Gasableitelemente sind bevorzugt in ihrer Erstreckung von den Batteriezellen bis zu den Eintrittsöffnungen gebogen oder geradlinig bzw. geknickt ausgebildet.

Die Anzahl der Gasableitelemente und Eintrittsöffnungen entspricht bevorzugt im Wesentlichen der Anzahl an Batteriezellen, oder im Wesentlichen der Hälfte der Anzahl an Batteriezellen, oder im Wesentlichen der doppelten Anzahl an Batteriezellen - beispielsweise wenn auf beiden Seiten der Batteriezellen Gasableitelemente angeordnet sind.

Vorzugsweise sind die Gasableitelemente im Wesentlichen parallel zueinander angeordnet und werden zwischen jeweils zwei Gasableitelementen Kanäle zur Führung entweichenden Gases zu den Eintrittsöffnungen gebildet.

Bevorzugt ist an den Eintrittsöffnungen jeweils eine Barriere eingerichtet, die den Durchtritt von aus einer Batteriezelle austretendem Gas in das Hohlprofil ermöglicht und den Durchtritt von Gas aus dem Hohlprofile zu einem Gasableitelement - insbesondere zu einem anderen Gasableitelement und /oder zu einem Gasableitkanal - insbesondere zu einem anderen Gasableitkanal, also dort wo nicht der Gaseintritt erfolgt ist - erschwert, insbesondere eine Klappe, semipermeable Membran oder thermisch zerstörbares Material. Das "Erschweren" schließt die Möglichkeit ein, dass der Gaseintritt gänzlich verhindert wird. Die Barriere kann derart ausgeführt sein, dass zwar Gas von einem Gasableitkanal in das Hohlprofil gelangen kann, aber nicht mehr zurück in denselben Gasableitkanal, beispielsweise durch eine Barriere in der Form ähnlich einer Klappe, beispielsweise befestigt am Ende eines Kanals, am Ende eines Gasableitelements oder an der Eintrittsöffnung am Hohlprofil.

Die Batteriezellen sind bevorzugt elektrisch leitend mit Busbars verbunden. Bevorzugt sind jeweils mehrere, beispielsweise je vier Batteriezellen, in Kontakt mit einem gemeinsamen Busbar. Vorzugsweise weisen die Busbars Öffnungen auf, die den Durchtritt austretenden Gases von den Batteriezellen zu den Gasableitelementen durch die Busbars ermöglichen.

Vorzugsweise werden die Gasableitelemente durch Kühlplatten oder Kühlplattenerweiterungen ausgebildet, bevorzugt durch umgebogene Ränder von Kühlplatten oder Kühlplattenerweiterungen, insbesondere durch 90 Grad hochgebogene Ränder. An den Gasableitelemente kann somit auch eine Kühlung erfolgen.

Bevorzugt liegen die den Batteriezellen zugeordneten Enden der Gasableitelemente im Bereich der Schmalseiten der Batteriezellen. Bevorzugt ist an zumindest einer Langseite der Batteriezellen, oder an beiden Langseiten der Batteriezellen, eine Barriereplatte, insbesondere eine Kühlplatte, angeordnet, so dass austretendes Gas im Wesentlichen zu den Schmalseiten der Batteriezellen geleitet wird und somit zu den Gasableitelementen.

Das Hohlprofil kann ein Teil der Tragstruktur des Kraftfahrzeuges sein oder auch ein eigenes, separates Bauteil zusätzlich zur Tragstruktur.

Das Hohlprofil erstreckt sich bevorzugt bis an das hintere Ende des Kraftfahrzeuges zu mindestens einer Austrittsöffnung, vorzugsweise zu zwei oder mehreren Austrittsöffnungen, also "Ventingplugs".

Die Batteriezellen sind bevorzugt Pouch-Zellen oder prismatische Batteriezellen und sind bevorzugt ohne Batteriegehäuse direkt in das Kraftfahrzeug verbaut.

### Kurzbeschreibung der Zeichnungen

Die Erfindung wird im Folgenden beispielhaft unter Bezugnahme auf die Zeichnungen beschrieben.
- Fig. 1a: ist eine schematische Darstellung wesentlicher Teile eines erfindungsgemäßen Kraftfahrzeugs mit einer Anordnung der Batteriezellen über die gesamte Breite eines Fahrzeuges.
- Fig. 1b: ist eine schematische Darstellung wesentlicher Teile eines erfindungsgemäßen Kraftfahrzeugs mit Batteriezellen, die jeweils nur über in etwa der halben Breite eines Kraftfahrzeuges angeordnet sind, mit einem zusätzlichen Hohlprofil in der Mitte.
- Fig. 2: zeigt schematisch die Umgebung einer Batteriezelle eines erfindungsgemäßen Kraftfahrzeugs von der Seite (links) und von vorne (rechts).
- Fig. 3a und b: zeigen schematisch einen Busbar eines erfindungsgemäßen Kraftfahrzeugs, mit verschiedenen beispielsweisen Öffnungsgeometrien.
- Fig. 4: zeigt schematisch den Busbar mit darunterliegenden Batteriezellen gemäß Fig. 3a oder 3b von oben.
- Fig. 5: zeigt schematisch einen Ausschnitt der Fig. 1 genauer.
- Fig. 6: zeigt schematisch eine Kühlplatte, die zu Gasableitelementen für ein erfindungsgemäßes Kraftfahrzeug erweitert wurde.

### Detaillierte Beschreibung der Erfindung

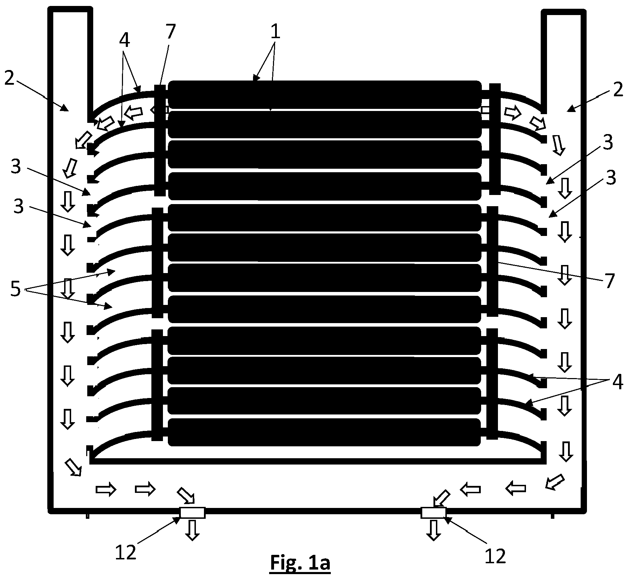

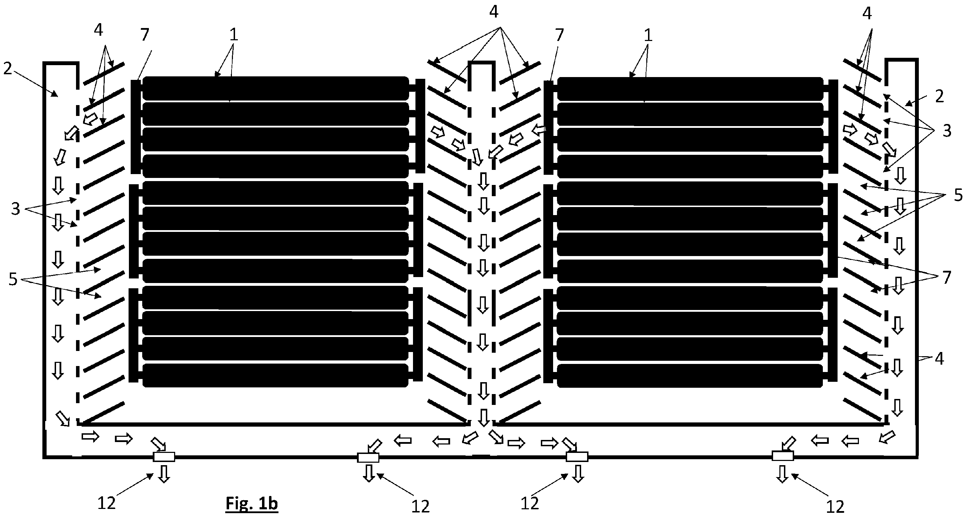

In Fig. 1a und Fig. 1b sind für die Erfindung wesentliche Teile eines erfindungsgemäßen Kraftfahrzeugs schematisch dargestellt.

Das Kraftfahrzeug umfasst eine Batterie, die eine Vielzahl von Batteriezellen 1, nämlich Pouch-Zellen, umfasst. Die Pouch-Zellen sind direkt in das Kraftfahrzeug verbaut. Entlang der Seiten und des in Fahrtrichtung hinteren Endes des Kraftfahrzeuges verlauft ein einteiliges oder aus mehreren Teilen zusammengesetztes Hohlprofil 2, das zum Beispiel teilweise zur Tragstruktur des Kraftfahrzeuges gehören kann.

Vor allem bei kürzeren Zellen können weitere Kanäle bzw. Hohlprofile 2 zwischen den Batteriezellen 1 in deren länglicher Erstreckung, wie in Fig. 1b dargestellt, vorgesehen werden. Auch hierbei kann das einteilige oder aus mehreren Teilen zusammengesetzte Hohlprofil 2 aus zusätzlichen Bauteilen bestehen und/oder durch Ausnutzen der bereits im Fahrzeug gewöhnlich verbauten Hohlräume aufweisenden Rahmenbauteile wie beispielsweise Längsträger, Querträger oder Scheller gebildet sein.

Das Hohlprofil 2 weist eine Vielzahl von Eintrittsöffnungen 3 auf, nämlich je nach Anordnung beispielsweise ca. so viele, wie es Batteriezellen 1 gibt, oder ca. die Hälfte oder ca. doppelt oder viermal so viele.

Um die Rahmenstruktur nicht zu sehr zu schwächen ist auch denkbar, ein zusätzliches Hohlprofil 2 im Fahrzeug anzuordnen, dass die Vielzahl von Eintrittsöffnungen 3 aufweist und entsprechend nahe an den Batteriezellen 1 angeordnet ist und die Verbindung zu den bereits im Fahrzeug gewöhnlicherweise angeordneten, einen Hohlraum aufweisenden Rahmenbauteilen 2 wie beispielsweise Längsträger, Querträger, Schweller etc. nur an wenigen Stellen ausgebildet ist, über die dann die Weiterleitung des Gases durch das Fahrzeug nach hinten erfolgt.

Eine Vielzahl von Gasableitelementen 4 ist an der Vielzahl von Batteriezellen 1 so angeordnet, dass aus den Batteriezellen 1 austretendes Gas von den Gasableitelementen 4 in die Eintrittsöffnungen 3 des Hohlprofils 2 geleitet wird. Im Wesentlichen ist für jede Batteriezelle 1 somit eine eigene Eintrittsöffnung 3 vorgesehen und ein Gasableitelement 4 und ein Kanal 5, bevorzugt jeweils links und rechts jeder Batteriezelle 1. Genauer erfolgt die Ableitung des Gases für eine bestimmte Batteriezelle 1, und /oder für zwei angrenzende Batteriezellen 1, vorzugsweise durch je einen Kanal 5, der jeweils zwischen zwei Gasableitelementen 4 gebildet wird, beispielsweise jeweils links und rechts an jeder Batteriezelle 1.

Fig. 1a zeigt je linker und rechter Zellenseite gleich viele Gasableitelemente wie die Anzahl der Zellen, wobei hierbei die oberste und unterste Zelle, an der an die Außenseite grenzenden Zellhälfte jeweils keinen Gasableitkanal und jeweils kein hierfür sonst erforderliches Gasableitelement aufweist. Demgegenüber zeigt die Fig 1b diesbezüglich oben und unten je Zellenseite zusätzliche Gasableitelemente 4 auf, sodass auch die äußersten Zellen 1 des Zellstapels bei Ausgasen an der nach außen gerichteten Zellhälfte einen Gasableitkanal aufweisen. Insofern gibt es in einer Ausführung wie in Fig. 1b genauer je linker und rechter Zellenseite zwei Gasableitelemente 4 mehr, als die Anzahl der Zellen bzw. je Zellenblock doppelt so viele Gasableitelemente als Zellen plus vier Gasableitelemente. Die Bestimmung "im Wesentlichen" für die Anzahl der Gasleitelemente umfasst derartige Randeffekte.

Im Allgemeinen sind mindestens zwei Gasableitelemente 4 vorhanden, um einen Kanal 5 für eine Batteriezellenseite zu erzeugen - insofern gibt es üblicherweise im Wesentlichen entweder auf einer Seite oder auf beiden Seiten gleich viele Gasableitelemente 4 wie Batteriezellen 1 (siehe Fig. 1a). Dies kann umfassen, dass zumindest ein oder zwei Gasableitelement 4 mehr als Batteriezellen 1 eingesetzt werden (siehe Fig. 1b).

Über das Hohlprofil 2 wird das Gas durch das Fahrzeug nach hinten, zu beispielsweise zwei oder vier Austrittsöffnungen 12 geleitet. Das Ausströmen von Ventinggasen aus dem Fahrzeugrahmen erfolgt bevorzugt durch Ventingplugs als Austrittsöffnungen 12, die bei einem definierten Druck eine Öffnung ins Freie aufmachen. Diese verhindern auch das Eindringen von Feuchtigkeit und Fremdstoffen in den Fahrzeugrahmen. Abhängig von der Ausströmkapazität der gewählten Ventingplugs und der möglichen Gasführung im Fahrzeugrahmen werden mehrere Ausströmungsstellen realisiert, um eine Abführung sicherzustellen.

Die Bewegung des abgeleiteten, ausströmenden Gases ist in den Figuren jeweils durch Pfeile eingezeichnet.

Die Gasableitelemente 4 sind gebogen (Fig. 1a) oder geradlinig (Fig. 1b) ausgebildet und ein Winkel zwischen einem jeweiligen Gasableitelement 4 und dem Hohlprofil 2 im Bereich der Eintrittsöffnung 3 beträgt ca. 45 Grad. Dadurch wird aus den Batteriezellen 1 austretendes Gas von den Gasableitelementen 4 in einer vorgesehenen Richtung in die Eintrittsöffnungen des Hohlprofils 2 geleitet, so dass der Abtransport des Gases in Richtung der Längserstreckung des Hohlprofils 2 erleichtert wird.

Die Gasableitelemente 4 werden bevorzugt mechanisch so konstruiert, dass mechanische Kräfte im Fall eines Crashs nicht oder so gering wie möglich an die Zellen 1 übertragen werden.

Die Gasableitelemente 4 sind im Wesentlichen parallel zueinander angeordnet und zwischen jeweils zwei Gasableitelementen 4 werden Kanäle 5 zur Führung entweichenden Gases zu den Eintrittsöffnungen 3 gebildet.

Bevorzugt werden die Batteriezellen 1 somit, entsprechend einem "Cell-To-Chassis" Fahrzeugkonzept einzeln oder bevorzugt in Gruppen direkt ins Fahrzeug verbaut. Dieses Konzept wird auch als "Cell-To-Car", "Cell-To-Vehicle" sowie "structural battery" bezeichnet. Verschiedene Zelltypen weisen verschiedene mögliche Stellen auf, an welchen sie im Fall eines thermischen Events ausgasen, wobei Pouch-Zellen keine eindeutige Vorzugsrichtung aufweisen. Von all diesen möglichen Ausgasungsstellen der Pouch-Zelle ist es erforderlich, austretende Ventinggase von der Zelle weg in den Außenraum zu leiten. Dies erfolgt gelenkt durch die Gasableitelemente 4 als Gasführungskomponenten, so dass die Zellen neben der ersten ausgasenden Zelle weniger aufgeheizt werden und so erst später (oder gar nicht) in die thermische Propagation gebracht werden. Bevorzugt erfolgt die Ableitung durch Kanäle in Hohlprofilen 2 des Fahrzeugrahmens.

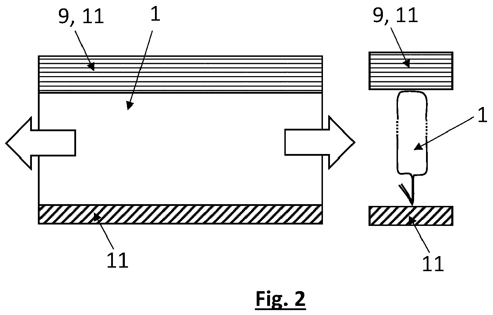

Die den Batteriezellen 1 zugeordneten Enden der Gasableitelemente 4 liegen an Schmalseiten der Batteriezellen 1. Wie in Fig. 2 dargestellt ist, sind an Langseiten der Batteriezellen 1, Barriereplatten 11, beispielsweise einseitig gebildet durch eine Kühlplatte 9, angeordnet, so dass austretendes Gas im Wesentlichen zu den Schmalseiten der Batteriezellen 1 geleitet wird.

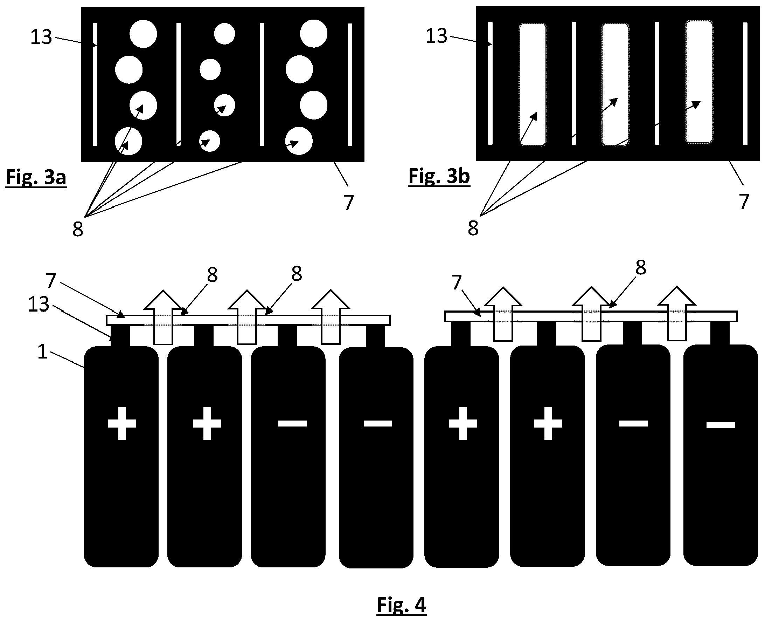

Ein Ausströmen in Richtung der langen Seiten der Pouch-Zelle wird einerseits durch den auf Seiten der Zellkühlung 9 liegenden Umschlagbereich der Pouch Folie und andererseits durch eine direkt an den Zellstapel 1 angrenzende Barriereschicht 11, zum Beispiel eine Mica-Verbundplatte, unterdrückt, umgelenkt und strömt bevorzugt zu den Seiten, wo meist auch die Busbars 7 und Anschlüsse 13 liegen (siehe Fig. 3). D.h. durch Anbindung der Kühlung 9 und einer verstärkt ausgeführten Barriereschicht 11 auf der gegenüberliegenden langen Seite wird Ventinggas primär auf Seiten der Anschlüsse 13 und Busbars 7 abgeführt.

Wie in Fig. 3a, Fig. 3b und Fig. 4 dargestellt, sind die Batteriezellen 1 über Anschlüsse 13 elektrisch leitend mit Busbars 7 verbunden, wobei die Busbars 7 Öffnungen 8 aufweisen, zum Durchtritt austretenden Gases von den Batteriezellen 1 zu den Gasableitelementen 4. Die Öffnungen 8 können beispielsweise rund sein (Fig. 3a) oder können beispielsweise Langlöcher sein (Fig. 3b) und können sich beispielsweise über einen größeren Bereich des Zwischenraumes zwischen zwei Anschlüssen 13 erstrecken.

Im Fall von nebeneinanderliegenden Pouchzellen, welche durch Busbars 7 verbunden oder auch parallelgeschaltet sind, wird das seitliche Ausströmen von Ventinggas durch die Busbars 7 gestört bzw. verhindert. Hier soll ein dickerer Busbar 7 eingesetzt werden, welcher durch Löcher 8 im Busbar 7 das Ausströmen von Ventinggas weg vom Zellverband erlaubt und trotzdem noch ausreichend Leiterquerschnitt aufweist.

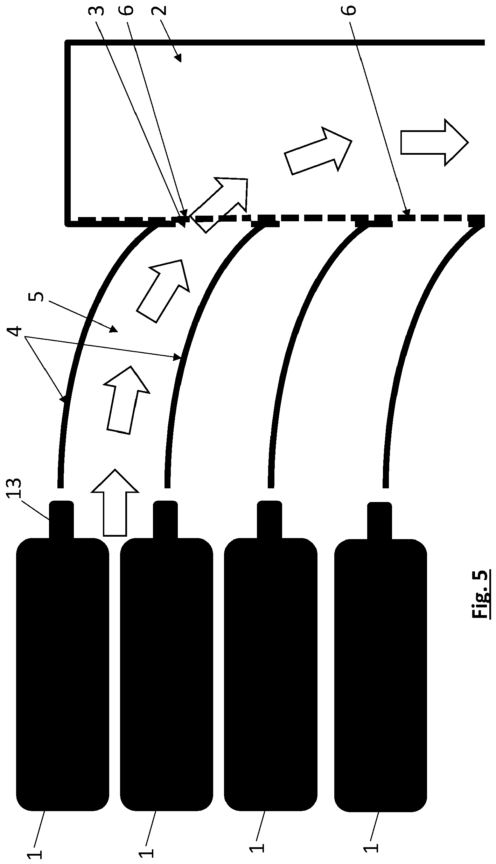

Fig. 5 zeigt, dass an den Eintrittsöffnungen 3 jeweils eine Barriere 6 eingerichtet ist, die den Durchtritt von aus einer Batteriezelle 1 austretendem Gas in das Hohlprofil 2 ermöglicht und den Durchtritt von Gas aus dem Hohlprofil 2 zu demselben und/oder zu einem anderen Gasableitelement 4 bzw. zu demselben und/oder zu einem anderen Gasableitkanal 5 erschwert oder verhindert, insbesondere eine Klappe, semipermeable Membran oder thermisch zerstörbares Material.

Die Gasableitelemente 4 sind so ausgebildet, dass sie mechanisch und thermisch dem Ausgasen einer einzelnen Zelle widerstehen. Das heiße Gas muss nachdem es die Busbars 7 passiert hat in Richtung der Eintrittsöffnungen 3 im Abführungskanal 2 gelenkt werden. Dabei ist vorrangiges Ziel die Nachbarzellen möglichst wenig aufzuheizen. Dies wird durch ca. 45° zu den Zellenlängsachsen geneigten oder ähnlich geformte Wandteilen erzielt.

Das Zurückströmen aus dem Fahrzeugrahmen bzw. Hohlprofil 2 zu anderen benachbarten Zellen 1 ist zu unterbinden. Dies wird durch die Formgebung der Gasableitelemente 4 erreicht, die in Fig. 5 dargestellt sind. Alternativ oder zusätzlich können auch Barrieren 6 verwendet werden, welche im Fall eines thermischen Events direkt an der Zelle 1 durchbrochen, bevorzugt thermisch zerstört, werden, jedoch in einem ausreichenden Abstand zur ausgasenden Zelle 1 den Gasfluss weiterhin unterbinden.

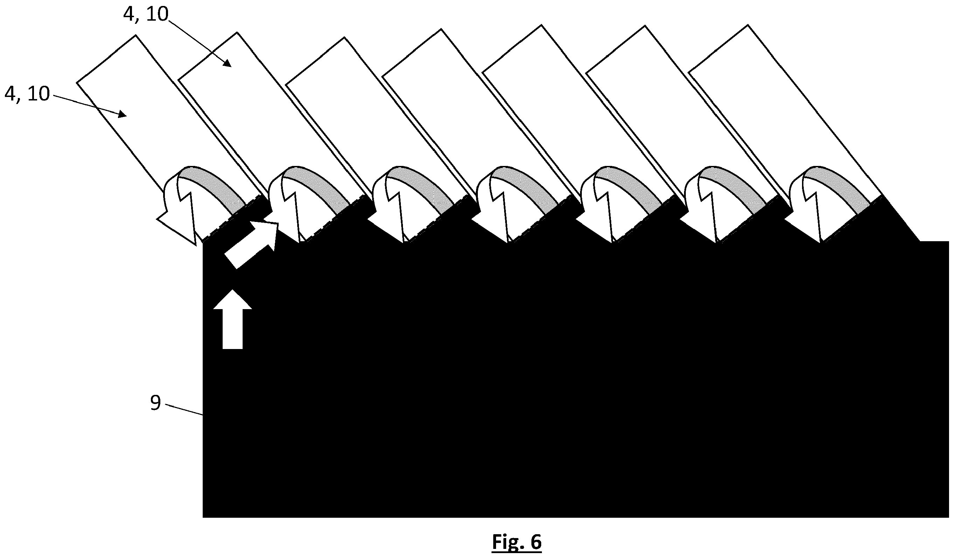

Wie in Fig. 6 dargestellt, können die Gasableitelemente 4 durch Kühlplatten 9 oder Kühlplattenerweiterungen 10, also Fortsätze an einer Kühlplatte 9, ausgebildet werden, bevorzugt durch umgebogene Ränder der Kühlplatten 9, nämlich der Kühlplattenerweiterungen 10.

### Bezugszeichenliste

- 1: Batteriezelle
- 2: Hohlprofil
- 3: Eintrittsöffnung
- 4: Gasableitelement
- 5: Kanal
- 6: Barriere
- 7: Busbar
- 8: Öffnung
- 9: Kühlplatte
- 10: Kühlplattenerweiterung
- 11: Barriereplatte
- 12: Austrittsöffnung
- 13: Anschluss

## Patentansprüche

1. Kraftfahrzeug, umfassend eine Batterie, die eine Vielzahl von Batteriezellen (1) umfasst, wobei das Kraftfahrzeug zumindest ein Hohlprofil (2) umfasst,
**dadurch gekennzeichnet , dass** das Hohlprofil (2) eine Vielzahl von Eintrittsöffnungen (3) aufweist, wobei eine Vielzahl von Gasableitelementen (4) an der Vielzahl von Batteriezellen (1) so angeordnet sind, dass aus den Batteriezellen (1) austretendes Gas von den Gasableitelementen (4) in die Eintrittsöffnungen (3) des Hohlprofils (2) geleitet wird.

2. Kraftfahrzeug nach Anspruch 1,
**dadurch gekennzeichnet , dass** ein Winkel zwischen einem jeweiligen Gasableitelement (4) und dem Hohlprofil (2) im Bereich der Eintrittsöffnung (3) kleiner als 70 Grad bevorzugt kleiner als 50 Grad ist, so dass aus den Batteriezellen (1) austretendes Gas von den Gasableitelementen (4) in einer vorgesehenen Richtung in die Eintrittsöffnungen des Hohlprofils (2) geleitet wird, so dass der Abtransport des Gases in Richtung der Längserstreckung des Hohlprofils (2) erleichtert wird, wobei bevorzugt die Gasableitelemente (4) in ihrer Erstreckung von den Batteriezellen (1) bis zu den Eintrittsöffnungen (3) gebogen oder geknickt ausgebildet sind.

3. Kraftfahrzeug nach zumindest einem der vorhergehenden Ansprüche,
**dadurch gekennzeichnet , dass** die Anzahl der Gasableitelemente (4) und Eintrittsöffnungen (3) im Wesentlichen der Anzahl an Batteriezellen (1) entspricht, oder im Wesentlichen der Hälfte der Anzahl an Batteriezellen (1) entspricht, oder im Wesentlichen der doppelten oder vierfachen Anzahl an Batteriezellen (1) entspricht.

4. Kraftfahrzeug nach zumindest einem der vorhergehenden Ansprüche,
**dadurch gekennzeichnet, dass** die Gasableitelemente (4) im Wesentlichen parallel zueinander angeordnet sind und zwischen jeweils zwei Gasableitelementen (4) Kanäle (5) zur Führung entweichenden Gases zu den Eintrittsöffnungen (3) gebildet werden.

5. Kraftfahrzeug nach zumindest einem der vorhergehenden Ansprüche,
**dadurch gekennzeichnet, dass** an den Eintrittsöffnungen (3) jeweils eine Barriere (6) eingerichtet ist, die den Durchtritt von aus einer Batteriezelle (1) austretendem Gas in das Hohlprofil (2) ermöglicht und den Durchtritt von Gas aus dem Hohlprofile (2) zu einem Gasableitelement (4) und/oder zu einem Gasableitkanal (5) erschwert, insbesondere eine Klappe, semipermeable Membran oder thermisch zerstörbares Material.

6. Kraftfahrzeug nach zumindest einem der vorhergehenden Ansprüche,
**dadurch gekennzeichnet, dass** die Batteriezellen (1) elektrisch leitend mit Busbars (7) verbunden sind, wobei die Busbars (7) Öffnungen (8) aufweisen, zum Durchtritt austretenden Gases von den Batteriezellen (1) zu den Gasableitelementen (4).

7. Kraftfahrzeug nach zumindest einem der vorhergehenden Ansprüche,
**dadurch gekennzeichnet , dass** die Gasableitelemente (4) durch Kühlplatten (9) oder Kühlplattenerweiterungen (10) ausgebildet werden, bevorzugt durch umgebogene Ränder von Kühlplatten (9) oder Kühlplattenerweiterungen (10).

8. Kraftfahrzeug nach zumindest einem der vorhergehenden Ansprüche,
**dadurch gekennzeichnet , dass** die den Batteriezellen (1) zugeordneten Enden der Gasableitelemente (4) an Schmalseiten der Batteriezellen (1) liegen und an zumindest einer Langseite der Batteriezellen (1), bevorzugt an zwei Langseiten der Batteriezellen (1), eine Barriereplatte (11), insbesondere eine Kühlplatte (9), angeordnet ist, so dass austretendes Gas im Wesentlichen zu den Schmalseiten der Batteriezellen (1) geleitet wird.

9. Kraftfahrzeug nach zumindest einem der vorhergehenden Ansprüche,
**dadurch gekennzeichnet , dass** das Hohlprofil (2) ein Teil der Tragstruktur des Kraftfahrzeuges ist und/oder dass sich das Hohlprofil (2) bis an das hintere Ende des Kraftfahrzeuges, zu mindestens einer Austrittsöffnung (12) erstreckt.

10. Kraftfahrzeug nach zumindest einem der vorhergehenden Ansprüche,
**dadurch gekennzeichnet , dass** die Batteriezellen (1) Pouch-Zellen und/oder prismatische Batteriezellen sind und/oder dass die Batteriezellen (1) ohne Batteriegehäuse direkt in das Kraftfahrzeug verbaut sind.
